Europäisches Patentamt

European Patent Office

Office européen des brevets

(19)

(11) Numéro de publication : **0 459 850 B1**

(12) **FASCICULE DE BREVET EUROPEEN**

(45) Date de publication du fascicule du brevet :
**21.12.94 Bulletin 94/51**

(51) Int. Cl.$^5$ : **G02B 27/00**

(21) Numéro de dépôt : **91401210.9**

(22) Date de dépôt : **07.05.91**

(54) **Afficheur à tête haute et casque comportant au moins un tel afficheur.**

(30) Priorité : **29.05.90 FR 9006656**

(43) Date de publication de la demande :
**04.12.91 Bulletin 91/49**

(45) Mention de la délivrance du brevet :
**21.12.94 Bulletin 94/51**

(84) Etats contractants désignés :
**BE DE ES FR GB IT NL SE**

(56) Documents cités :
**EP-A- 0 129 821**
**DE-A- 3 032 849**

(73) Titulaire : **SEXTANT Avionique**
**5-7 rue Jeann-Braconnier,**
**Parc Tertiaire**
**F-92380 Meudon la Foret (FR)**

(72) Inventeur : **Migozzi, Jean-Blaise**
**THOMSON-CSF,**
**SCPI,**
**Cédex 67**
**F-92045 Paris la Défense (FR)**
Inventeur : **Monnier, Laurent**
**THOMSON-CSF,**
**SCPI,**
**Cédex 67**
**F-92045 Paris la Défense (FR)**

(74) Mandataire : **Courtellemont, Alain et al**
**THOMSON-CSF,**
**SCPI,**
**B.P. 329,**
**50, rue Jean-Pierre Timbaud**
**F-92402 Courbevoie Cédex (FR)**

## Description

La présente invention concerne un ensemble optique qui permet à un observateur de regarder simultanément ce qui se trouve normalement dans son champ visuel et une image collimatée, par introduction de cette image dans son champ visuel à l'aide d'une optique de combinaison comportant au moins un miroir semi-réfléchissant. Il est à noter que les termes "image collimatée" signifient, dans ce texte, image se formant à l'infini et que, le fait de fournir à l'observateur une image collimatée, lui évite d'avoir à accommoder de façons différentes et donc à se fatiguer la vue quand il fixe son attention sur le paysage et quand il la fixe sur l'image. L'invention concerne également des casques équipés de dispositifs optiques pour l'introduction d'une image dans le champ visuel d'un observateur.

De tels dispositifs optiques existent ; ils sont, en particulier, utilisés en aéronautique pour fournir, par exemple, des informations de pilotage à un pilote sans qu'il ait à quitter des yeux le paysage.

Ainsi la demande de brevet européen EP-A-0077 193 décrit un premier ensemble optique comportant un bloc de matériau transparent avec deux faces planes, parallèles, polies et une face d'entrée et, à l'intérieur de ce bloc, un miroir sphérique semi-réfléchissant. Ce bloc est réalisé de façon qu'un rayon incident, provenant d'un générateur d'images, après avoir traversé la face d'entrée, subisse une réflexion totale sur une des deux faces parallèles puis une réflexion partielle sur le miroir semi-réfléchissant, puis une réfraction sur celle des deux faces parallèles sur laquelle il a déjà subi une réflexion totale. Les rayons lumineux provenant du paysage à observer, traversent le bloc optique par les deux faces parallèles et le miroir sphérique, avant d'atteindre l'oeil de l'observateur . Cet ensemble optique présente, en particulier, deux inconvénients : le bloc transparent est épais et, donc, lourd et encombrant et la face d'entrée constitue un masque qui réduit le champ visuel de l'observateur.

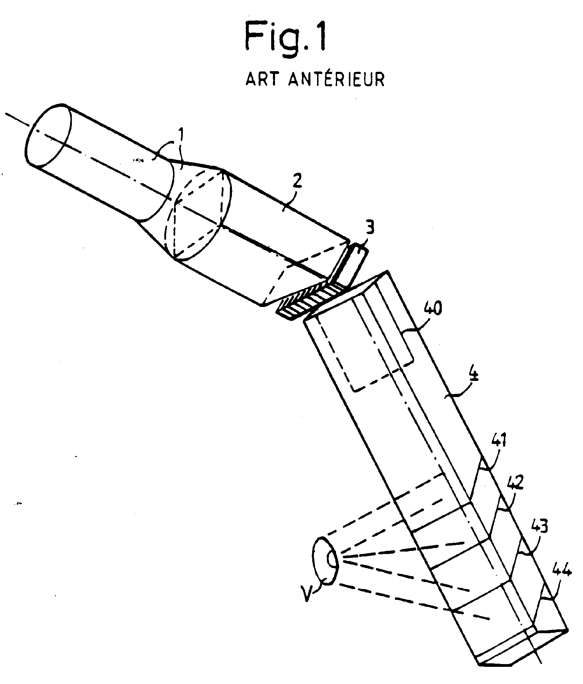

Il est également connu, par la demande de brevet EP-A-0 399 865 (publiée le 28.11.90 et citée en vertu de l'article 54(3) de la CBE), d'utiliser un générateur d'images et une suite de miroirs semi-réfléchissants, parallèles, disposés dans un guide d'ondes optique et traités pour être réfléchissants sous des incidences de plus en plus faibles à mesure qu'ils sont plus éloignés du générateur. L'observateur regarde le paysage par transparence à travers les miroirs semi-réfléchissants. Ce deuxième ensemble optique, qui sera représenté à l'aide de la figure 1 ci-annexée, présente certains inconvénients et, plus particulièrement, une pupille d'injection de l'image dans l'optique de combinaison, d'une trentaine de millimètres de haut, donc trop grande, et des reflets parasites dus aux réflexions sur la tranche du guide d'ondes optique.

Le but de la présente invention est d'éviter ou, pour le moins, de réduire les inconvénients de ces ensembles optiques connus.

Ceci est obtenu avec un ensemble optique qui reprend sensiblement les éléments constitutifs du deuxième ensemble optique décrit ci-avant mais en combinant de façon différente et en modifiant la structure de l'un d'entre eux, de manière à lui faire jouer un rôle différent, tel que défini par la revendication 1.

D'autres particularités et caractéristiques de l'invention apparaîtront à l'aide de la description ci-après et des figures s'y rapportant, qui représentent :
- la figure 1, un ensemble optique selon l'art connu,
- la figure 2, une vue de dessus d'un ensemble optique selon l'invention,
- les figures 3 et 4, des vues en coupe effectuées dans l'ensemble optique selon la figure 2,
- la figure 5, une vue de détail d'un des éléments constitutifs de l'ensemble selon la figure 2,
- la figure 6, une vue d'une variante de réalisation à l'élément selon la figure 5.

La figure 1 montre, en vue de dessus schématique, un ensemble optique selon l'art antérieur, tel qu'il est placé pour rapport à un observateur, dont n'apparaît, sur la figure, que l'oeil gauche, V. Un autre ensemble semblable, destiné à l'oeil droit de l'observateur, n'a pas été dessiné sur la figure de même que n'a pas été représenté le casque que porte l'observateur et sur lequel sont fixés les deux ensembles optiques.

L'ensemble optique selon la figure 1 comporte un générateur d'images 1, muni d'un tube cathodique, une optique de collimation 2 pour mettre à l'infini l'image générée sur l'écran du tube cathodique, une galette de symétrisation, 3, faite d'un empilement à pas constant de miroirs rectangulaires tous de mêmes dimensions et une lame transparente 4 qui comporte des inclusions 40 à 44 dont l'une, 40, est à équidistance de deux grandes faces parallèles de la lame 4 et dont les autres, qui sont parallèles entre elles, et en biais par rapport aux deux grandes faces, sont appelées volets.

Les volets 41 à 44 comportent chacune un miroir semi-réfléchissant et l'oeil, V, peut regarder simultanément le paysage par transparence à travers les volets 41 à 44 et l'image produite par le générateur d'images 1, par réflexion sur les volets 41 à 44. La lame 4 est une lame mince de section rectangulaire, à faces parallèles, dont les deux grandes faces sont inclinées à 15° par rapport à la verticale quand la tête de l'observateur n'est inclinée ni vers le haut ni vers le bas. Corrélativement l'axe optique de l'optique de collimation et du tube cathodique, qui sont dans le prolongement l'un de l'autre, sont inclinés de 15 degrés vers le haut ; de plus l'axe principal du guide d'ondes optique que constitue la lame 4 et l'axe optique de l'optique de collimation forment un angle de 135 degrés. Le fonctionnement de l'ensemble optique de la figure 1 peut être sommairement décrit comme suit : le générateur d'images, 1, fournit une image sur l'écran de son tube cathodique ; l'optique de collimation, 2, en forme une image à l'infini ; la galette de symétrisation, 3, qui est une optique d'équipartition, crée une image symétrique par rapport à un plan horizontal ; la première inclusion, 40, répartit uniformément les rayons d'un même champ sur les volets 41 à 44 ; les volets 41 à 44 réfléchissent sélectivement les différents champs pour former une pupille d'observation éloignée du dispositif et dans laquelle l'oeil de l'observateur pourra apercevoir à la fois l'image fournie par le générateur 1 et le paysage placé devant lui.

Dans cet ensemble optique connu, la galette de symétrisation et l'utilisation de la réflexion sur la tranche de la lame 4 ou, plus précisément, sur la petite face latérale supérieure de la lame 4, permettent de réduire de moitié la hauteur de l'optique de collimation. Toutefois, comme il a été indiqué au début de ce document, cet ensemble optique présente des inconvénients que l'ensemble selon l'invention permet d'éviter ou, pour le moins, de réduire.

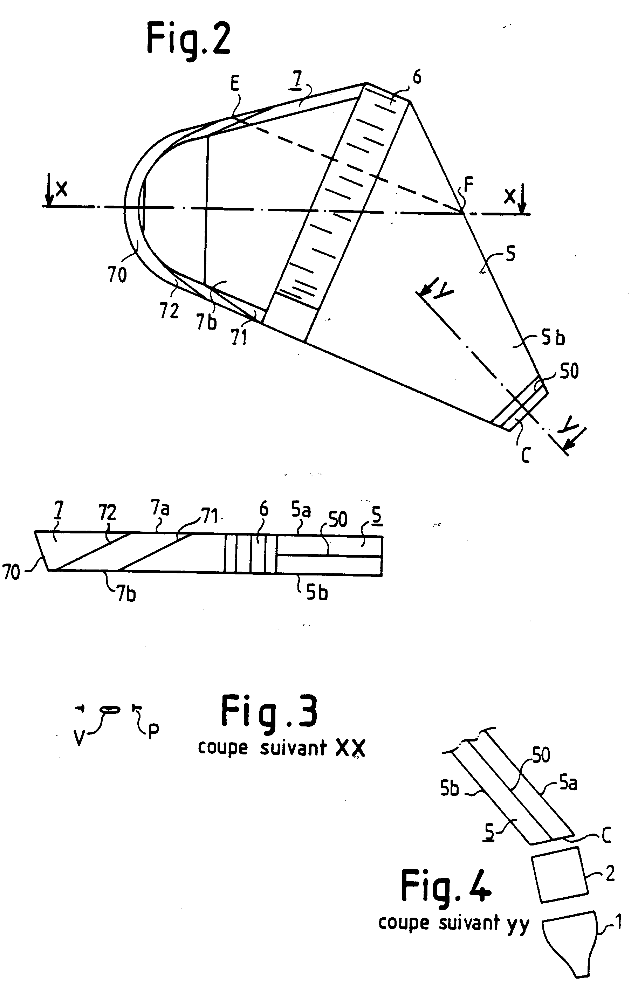

La figure 2 montre, vu du côté où est placé l'oeil d'un observateur, un ensemble optique pour l'introduction, en surimpression, d'une image dans le champ visuel d'un observateur. Sur la figure 2, deux traits d'axe, XX et YY, montrent les traces de deux plans de coupe correspondant à deux vues en coupe dessinées respectivement selon les figures 3 et 4.

L'ensemble optique selon les figures 2, 3 et 4 comporte une première lame transparente 5, couplée optiquement à une seconde lame transparente 7 par une galette de concentration 6, formé par un empilement de miroirs réfléchissants, chaque miroir étant constitué par un rectangle de 8 sur 10 mm de côtés. La lame 5 comporte deux grandes faces parallèles 5a et 5b distantes de 8 mm ; la lame 7 comporte également deux grandes faces parallèles 7a et 7b qui sont respectivement dans les mêmes plans que les faces 5a et 5b.

Un tube cathodique, 1, représenté sur la figure 4, suivi d'une optique de collimation 2, également représentée sur la figure 4, fournissent une image collimatée, c'est-à-dire une image se formant à l'infini. Les rayons de cette image pénètrent dans la lame 5, par une extrémité C qui est inclinée à 55 degrés par rapport aux grandes faces 5a et 5b. La lame 5 comporte, à mi-distance de ses deux grandes faces, un miroir semi-réfléchissant 50.

Les deux grandes faces parallèles de la lame 5 se présentent comme de pseudo-triangles rectangles dont un angle aigu est tronqué par une découpe droite correspondant à l'extrémité C qui sert d'accès pour l'image collimatée, et dont le côté opposé à cet angle tronqué forme une extrémité opposée à l'extrémité C et est accolé à l'un des côtés de la galette 6.

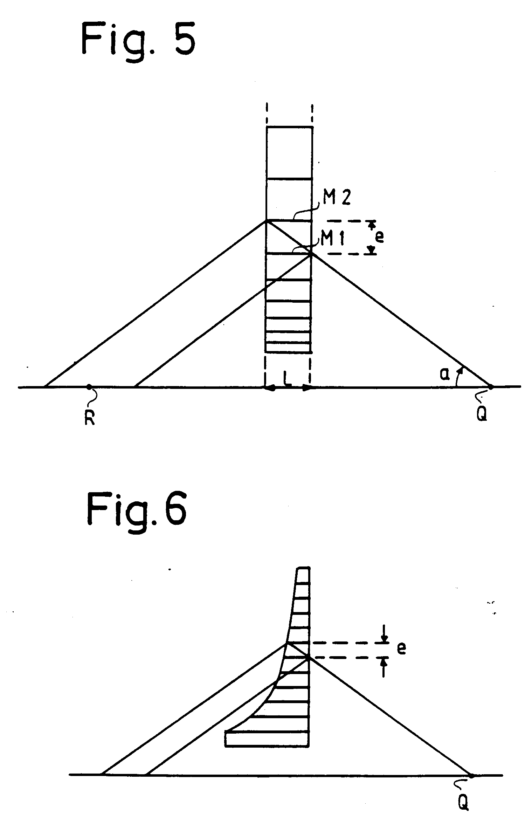

Les miroirs constituant la galette 6 ont leur face qui est perpendiculaire aux grandes faces de la lame 5 et au côté opposé à l'angle tronqué dans les pseudo-triangles des faces 5a, 5b. La lumière, qui provient de l'optique de collimation 2, traverse la galette 6 après un nombre impair de réflexions, comme il sera vu à l'aide de la figure 5, et pénètre alors dans la lame 7.

Les deux grandes faces de la lame 7 se présentent, elles aussi, comme de pseudo-triangles rectangles, dont un angle aigu est tronqué par une découpe en arc de cercle et dont le côté opposé à l'angle tronqué correspond à une extrémité de la lame 7 accolée à la galette 6 ; c'est par cette extrémité que la lumière de l'image collimatée, après avoir traversé la lame 5 et la galette 6, pénètre dans la lame 7.

Comme il apparaît sur les figures 2 et 3, ceux des bords de la lame 7, qui ne sont pas accolés à la galette, sont chanfreinés. Ainsi ces bords ne produisent pas un masque dans le champ visuel de l'oeil V, d'un observateur placé au niveau de la pupille d'observation P de l'ensemble optique. L'oeil V et la pupille d'observation sont dessinés sur la figure 3 ; ils se trouvent du côté de la face 7b, à environ 27 mm de cette face, à l'aplomb du centre des arcs de cercle qui tronquent les pseudo-triangles des faces 7a, 7b.

La lame 7 comporte deux volets 71, 72, constitués par des miroirs semi-réfléchissants, dont l'indice de réflexion est de 30 pour-cent ; ces volets sont inclinés à 27 degrés par rapport aux grandes faces 7a, 7b de la lame 7 et sont distants de 6,9 mm l'un de l'autre.

Le fonctionnement des différentes parties de l'ensemble optique qui vient d'être décrit, est expliqué ci-après.

La transmission lumineuse dans la lame 5 se fait avec réflexions totales sur les deux grandes faces 5a et 5b.

Le miroir semi-réfléchissant 50 permet aux volets 71, 72 d'être touchés par tous les rayons, quelle que soit leur incidence, provenant du générateur d'images 1 à travers l'optique de collimation 2 ; ce miroir 50 a donc le même rôle que le miroir 40 selon la figure 1.

La galette de concentration 6 sert à reconcentrer les rayons issus de l'optique de collimation vers la pupille d'observation P. Les rayons transmis par l'optique de collimation traversent la galette où ils subissent un nombre impair de réflexions avant de se diriger vers la pupille d'observation P. La figure 5 montre comment, pour une seule réflexion dans la galette, doit être déterminé, à largeur L de galette constante, le pas variable e entre les miroirs de la galette. Sur cette figure ont été indiqués les points Q et R qui sont les points centraux de la sortie de l'optique de collimation et de la pupille d'observation, tels qu'ils sont vus de la galette 6. La droite QR est perpendiculaire aux grandes dimensions de la galette 6 et, pour qu'il y ait une seule réflexion des rayons issus de M sur deux miroirs successifs M1, M2 de la galette, il faut que

$$e = L.\tan a$$

où a est l'angle de QR avec le rayon issu de Q et atteignant le miroir M2 après avoir frôlé le miroir M1, et e la distance entre M1 et M2.

Il peut être intéressant de reconcentrer les rayons issus de l'optique de collimation en leur faisant subir un nombre impair, supérieur à un, de réflexions dans la galette 6, en effet cela permet de réduire le pas, e, entre les miroirs successifs quand il devient trop important et de réduire ainsi le diamètre de la pupille d'injection.

La formule précédente s'écrit alors, d'une façon plus générale :

$$e = L.\tan a/(2k + 1)$$

où 2k+1 est le nombre de réflexions entre deux miroirs successifs de la galette avec k entier supérieur à -1.

La liste du paragraphe suivant donne les valeurs de e dans l'exemple de réalisation selon les figures 2 à 5 ; il est à noter qu'à partir du douzième pas, le nombre de réflexions est de trois entre deux miroirs successifs alors qu'il était de un avant.

Les couples de chiffres ci-après correspondent, pour le premier, au rang du pas compté à partir du pas le plus proche de la ligne PQ et, pour le second, à la valeur en milimètres de ce pas :

1-1 ; 2-1 ; 3-1 ; 4-1 ; 5-1 ; 6-1,05 ; 7-1,26 ; 8-1,51 ; 9-1,8 ; 10-2,16 ; 11-2,59 ; 12-1,04 ; 13-1,1 ; 14-1,17 ; 15-1,26 ; 16-1,33 ; 17-1,42 ; 18-1,52 ; 19-1,61 ; 20-1,72 ; 21-1,84 ; 22-1,95 ; 23-2,09 ; 24-2,22 ; 25-2,37 ; 26-2,52 ; 27-2,52 ; 28-2,52.

Dans la formule

$$e = L. \tan a/ (2k + 1)$$

a et k sont les variantes pour la galette dont il vient d'être question.

Une galette pour un ensemble optique selon l'invention peut également être conçue avec un pas constant et une largeur de galette variable, voire un nombre de réflexions variable dans la galette. La figure 6 est un schéma qui illustre une telle variante. Il est à noter que, dans la réalisation selon la figure 6; le côté par lequel la lumière pénètre dans la galette n'est pas droit et que le côté de la lame 5, qui est en contact avec la galette et en épouse la forme, n'est, non plus, pas droit.

La galette 5 selon les figures 2, 3 et 5, de même que la galette selon la figure 6, sert, comme il a été vu, à reconcentrer vers la pupille d'observation les rayons provenant de l'optique de collimation ; elle a donc un rôle totalement différent de celui de la galette 3 selon la figure 1 puisque cette galette 3 sert, elle, à créer une deuxième image symétrisée, l'oeil observant tantôt l'image directe, pour le champ du bas, tantôt l'image indirecte, pour le champ du haut.

Après avoir traversé la galette 6, la lumière provenant de l'optique de collimation pénètre dans la lame 7 où elle est réfléchie vers l'oeil grâce aux volets constitués par les miroirs semi-réfléchissants 71, 72. Par transmission, ces volets permettent également, à l'observateur, de voir le paysage extérieur situé de l'autre côté de la lame 7, si bien que l'observateur a, dans son champ visuel, le paysage extérieur avec l'image collimatée en surimpression.

L'ensemble optique décrit à l'aide des figures 2 et suivantes, de par ses dimensions réduites, ne nécessite que deux miroirs semi- réfléchissants de combinaison 71, 72, dans la lame 7 ; de ce fait les miroirs 71, 72 n'ont pas besoin d'être traités pour être sélectifs en incidence comme c'est le cas pour la réalisation selon la figure 1 où les pertes de lumière sur les volets successifs feraient que, sans un tel traitement, l'image vue par l'oeil et provenant de l'optique de collimation serait très nettement plus lumineuse dans sa partie fournie par le volet 41 que dans sa partie fournie pour le volet 44.

La présente invention n'est pas limitée aux exemples décrits ou mentionnés ci-avant ; c'est ainsi, en particulier, que les épaisseurs, les angles et les formes peuvent être modifiés, en fonction des conditions d'utilisation et des dimensions de l'optique de collimation. De plus, en effectuant une réflexion sur tranche, grâce à un miroir dont le plan serait perpendiculaire au plan de la figure 2 et passerait par le segment de droite EF dessiné sur cette figure, il est possible de réduire l'ensemble optique décrit à l'aide des figures 2, de toute sa partie située au-dessus de ce segment de droite.

**Revendications**

1. Ensemble optique pour l'introduction, en surimpression, d'une image dans le champ visuel d'un observateur (V) regardant au niveau d'une pupille d'observation (P), l'ensemble optique comportant : une première lame transparente (5) avec deux grandes faces planes et parallèles (5a, 5b), une première (C) et une seconde extrémité opposées, disposées entre les grandes faces, et un miroir semi-réfléchissant (50) à équidistance des deux grandes faces, la première extrémité étant couplée optiquement à un générateur d'images (1) de manière telle que les rayons lumineux provenant du générateur se propagent dans la lame par réflexions totales sur les deux grandes faces ; une seconde lame transparente (7) avec deux grandes faces planes (7a, 7b) disposées respectivement dans le prolongement des deux grandes faces de la première lame (5), une extrémité disposée entre les deux grandes faces de la seconde lame, et n, où n est un entier supérieur à 1, volets plans, semi-réfléchissants (71, 72), ces volets étant parallèles, placés entre les deux grandes faces de la seconde lame (7), inclinés par rapport à ces deux grandes faces et disposés dans le champ visuel de l'observateur ; et une galette de concentration (6) formée par un empilement de miroirs plans dont les surfaces sont perpendiculaires aux grandes faces (5a, 5b, 7a, 7b), les miroirs de l'empilement étant accolés, d'un premier côté, à la seconde extrémité de la première lame et, d'un second côté opposé au premier côté, à l'extrémité de la seconde lame, de manière à assurer, entre ces deux extrémités auxquelles ces miroirs sont accolés, un couplage optique tel que les rayons lumineux provenant du générateur (1) et propagués dans la première lame traversent la galette après un nombre impair de réflexions et atteignent les volets (71, 72) pour s'y réfléchir, au moins partiellement, en direction de la pupille d'observation (P).

2. Ensemble optique selon la revendication 1, dans lequel les volets (71, 72) sont au nombre de deux et sont tous les deux réfléchissants pour les mêmes incidences.

3. Ensemble optique selon la revendication 1, dans lequel, sauf au moins à son extrémité, la seconde lame (7) a ses bords situés entre ses grandes faces (7a, 7b) qui sont chanfreinés (70) afin d'éviter de produire un masque dans le champ visuel de l'observateur.

4. Casque comportant au moins un ensemble selon l'une au moins des revendications précédentes.

**Patentansprüche**

1. Optische Einheit zur Einführung in Einblendung eines Bilds in das Sichtfeld eines Beobachters (V), der in Höhe einer Beobachtungspupille (P) beobachtet, wobei die optische Einheit aufweist: ein erstes transparentes Plättchen (5) mit zwei großen ebenen und parallelen Seiten (5a, 5b), mit einem ersten Ende (C) und einem diesem entgegengesetzten zweiten Ende, die sich zwischen den großen Seiten befinden, und einen halbreflektierenden Spiegel (50) in gleichem Abstand von den beiden großen Seiten, wobei das erste Ende optisch an einen Bildgenerator (1) derart gekoppelt ist, daß vom Generator kommende Lichtstrahlen sich in dem Plättchen durch Total-Reflexion an den beiden großen Seiten fortpflanzen, ein zweites transparentes Plättchen (7) mit zwei großen ebenen Seiten (7a, 7b), die je in der Verlängerung einer der beiden großen Seiten des ersten Plättchens (5) angeordnet sind, und mit einem Ende, das zwischen den beiden großen Seiten des zweiten Plättchens liegt, und n (n ist eine ganze Zahl größer als 1) ebene, halbreflektierende Flügel (71, 72), wobei diese Flügel parallel verlaufen, zwischen den beiden großen Seiten des zweiten Plättchens (7) angeordnet, in Bezug auf diese beiden Seiten geneigt und im Sichtfeld des Beobachters angeordnet sind, und eine Konzentrationsscheibe (6), die von einem Stapel ebener Spiegel gebildet wird, deren Oberflächen senkrecht zu den großen Seiten (5a, 5b, 7a, 7b) liegen, wobei die Spiegel des Stapels mit einer Seite an das zweite Ende des ersten Plättchens und mit einer zweiten, der ersten entgegengesetzten Seite an das Ende des zweiten Plättchens angeklebt sind, so daß zwischen diesen beiden Enden, an die diese Spiegel geklebt sind, eine optische Kopplung bewirkt wird, wobei die vom Generator (1) kommenden und im ersten Plättchen geführten Lichtstrahlen die Scheibe nach einer ungeraden Zahl von Reflexionen durchqueren und die Flügel (71, 72) erreichen, um zumindest teilweise in Richtung der Beoachtungspupille (P) reflektiert zu werden.

2. Optische Einheit nach Anspruch 1, in der zwei Flügel (71, 72) vorgesehen sind, die beide für die gleichen Einfallswinkel reflektierend sind.

3. Optische Einheit nach Anspruch 1, in der außer mindestens an seinem Ende die Ränder des zweiten Plättchens (7), die zwischen seinen großen Seiten (7a, 7b) liegen, abgeschrägt (70) sind, um eine Maskenbildung im Sichtfeld des Beobachters zu verhindern.

4. Helm mit mindestens einer Einheit gemäß mindestens einem der vorhergehenden Ansprüche.

**Claims**

1. Optical assembly for introducing an image, by superimposition, into the field of view of an observer (V) viewing at the location of an observation pupil (P), the optical assembly including: a first transparent plate (5) with two large plane and parallel faces (5a, 5b), a first end (C) and a second end which are opposite, and which are disposed between the large faces, and a semi-reflecting mirror (50) which is equidistant from the two large faces, the first end being optically coupled to an image generator (1) in such a manner that the light rays originating from the generator propagate within the plate by total reflections on the two large faces; a second transparent plate (7) with two large plane faces (7a, 7b) disposed respectively in the extension of the two large faces of the first plate (5), an end disposed between the two large faces of the second plate, and n, where n is an integer greater than 1, semi-reflecting plane outer members (71, 72), these outer members being parallel, and placed between the two large faces of the second plate (7), and being inclined in relation to these two large faces and disposed within the field of view of the observer; and a concentrating slab (6) formed by a stack of plane mirrors, the surfaces of which are perpendicular to the large faces (5a, 5b, 7a, 7b), the mirrors of the stack being attached, by a first side, to the second end of the first plate and, by a second side opposite to the first side, to the end of the second plate, in such a manner as to ensure, between these two ends to which these mirrors are attached, an optical coupling such that the light rays originating from the generator (1) and having propagated in the first plate pass through the slab after an odd number of reflections and reach the outer members (71, 72) to be reflected thereat, at least partially, in the direction of the observation pupil (P).

2. Optical assembly according to Claim 1, in which the outer members (71, 72) are two in number and are both reflective for the same angles of incidence.

3. Optical assembly according to Claim 1, in which, except at least at its end, the second plate (7) has its margins situated between its large faces (7a, 7b) which are chamfered (70) in order to prevent the production of a mask within the field of view of the observer.

4. Helmet including at least one assembly according to at least one of the preceding claims.

# Fig.1

ART ANTÉRIEUR

# Fig.2

# Fig.3
coupe suivant XX

# Fig.4
coupe suivant yy

# Fig. 5

# Fig.6